Europäisches Patentamt

(19) **European Patent Office**

Office européen des brevets

(11) Publication number: **0 100 620**
**A1**

(12) # EUROPEAN PATENT APPLICATION

(21) Application number: **83304096.7**

(22) Date of filing: **14.07.83**

(51) Int. Cl.³: **B 01 D 19/00**
**B 01 D 17/02**

(30) Priority: **30.07.82 GB 8222062**

(43) Date of publication of application:
**15.02.84 Bulletin 84/7**

(84) Designated Contracting States:
**DE FR GB**

(71) Applicant: **IMPERIAL CHEMICAL INDUSTRIES PLC**
**Imperial Chemical House Millbank**
**London SW1P 3JF(GB)**

(72) Inventor: **Middleton, John Colin**
**10 Mount Pleasant Road**
**Davenham Northwich Cheshire(GB)**

(74) Representative: **Hall, David Brian et al,**
**Imperial Chemical Industries PLC Legal Department:**
**Patents Po Box 6**
**Welwyn Garden City Herts, AL7 1HD(GB)**

(54) **Phase disengagement.**

(57) Gases are removed from liquids such as fermentation media and industrial liquors, by causing the gasified liquid to flow past at least one probe comprising a baffle (22) and a tubular vent (21) to leeward of the baffle. Gas collecting in the lower pressure zone to leeward of the baffle will generally escape through the vent without external assistance although vacuum assistance can be applied where circumstances demand it. This provides an inexpensive, low maintenance, generally self-powered system for degassing fermentation media and industrial liquors, and it can also be used for removing low density liquids from immiscible mixtures with dense liquids in like manner.

Fig.6.

EP 0 100 620 A1

0100620

-1-

QM.32408 EP

PHASE DISENGAGEMENT

The invention relates to a method for disengaging a fluid from a mixture of the fluid with one or more denser fluids, and to apparatus for carrying out the method. The invention is especially applicable to the removal of gases from gas/liquid flowing mixtures in which the gas may be in the form of bubbles or at least partially dissolved in the liquid.

In many industrial processes gas disengagement from a flowing liquid medium can present substantial problems. Examples of processes where such problems can arise include fermentations, chlorinations, hydrogenations and other gas/liquid reactions where substantial frothing, persistent foaming or liquid entrainment in exiting gas streams can limit the design of process vessels (e.g. by requiring larger surface areas). Similarly with two liquids, globules of low density oil may be difficult to remove from an oil/water mixture.

According to a first aspect of the invention, a method for disengaging a first fluid from a fluent mixture of the first fluid with one or more denser fluids, comprises using at least one probe comprising a baffle and a tubular vent having an inlet adjacent to a surface of the baffle and an outlet remote from its inlet, submerging the baffle and vent inlet within the mixture while maintaining the outlet outside the mixture, causing relative motion to occur between the probe and the mixture in a direction defining the said surface of the baffle as a leeward surface and at a velocity within a range which causes first material to collect in a zone adjacent to the leeward surface, the vent inlet being within the zone, and removing first material from the zone through the vent.

We prefer to use a baffle having a concave leeward surface. The concave configuration can be achieved simply by using a curved plate, or alternatively the thickness of the baffle may vary across its section, e.g. by having a semi-circular section concave surface and a parabola section convex surface thereby to provide a more narrow entry into the flowing mixture for improving the streamlines around the baffle.

A suitable probe, which we find can work well and which we prefer for its simplicity, comprises a tube having an open end to provide the vent inlet, and a portion of the tube wall extending beyond the open end to provide an integral baffle. This can be formed very simply by removing, for example, one half of the tube over the length desired for the baffle. Thus a circular section tube would have a semi-circular baffle extending from it, or a probe with a narrower entry may

0100620

-3-

be provided by using an elliptical section tube divided down its minor axis to form the integral baffle.

The relative motion may be caused by moving the probe through the fluent mixture or by flowing the mixture past the probe. Either way, as the baffle flows through the mixture at an appropriate rate, the less dense fluid collects adjacent to the leeward surface and forms a zone of predominently the first fluid. This can readily be seen where the first fluid is a gas, mixed with water. Where the relative velocity is too low, the energy may be too small to disengage any significant amount of first material. As the relative velocity increases, the proportion of the less dense fluid in the zone adjacent to the leeward surface becomes higher than in the surrounding region, and material removed from this zone will therefore reduce the average proportion of the lighter phase in the remaining fluid. With further increase in relative velocity, the zone may become filled exclusively with the less dense fluid, especially where the less dense fluid is a gas, which may then be removed from the zone without any of the more dense fluid.

As the vent opening is adjacent to one surface of the baffle, it is important that the zone be formed adjacent to that surface, a phenomenom which will only be achieved so long as that surface remains the leeward surface. Moreover, as the leeward surface is defined by the direction of the relative flow, such flow must be reasonably consistant to maintain the surface as a leeward surface; although some minor fluctuations may occur without due loss of efficiency.

A reservoir of mixture can have some or substantially all of the first material removed by moving the probe through the mixture, e.g. on the end

-4-

of a rotating arm. However, this can be done more effectively by mounting a plurality of such probes to form an array.

Accordingly we provide as a further aspect of the invention, apparatus for disengaging a first fluid from a fluent mixture of the first fluid with one or more denser fluids, comprising a plurality of probes and a means for holding the probes, the probes extending from the holding means with the extended end of each probe comprising a baffle and each probe having a tubular vent with an inlet adjacent to a surface of the baffle, each probe being assembled in the holding means so that the surfaces of the baffles adjacent to their vent inlets are all aligned in the same direction, whereby on submerging the baffles in a fluid and causing relative motion of the probes with respect the fluid, when the direction of relative motion is such that the surface of one baffle adjacent to its vent inlet is a leeward surface, the corresponding surfaces of the other probes are likewise leeward surfaces. The tubular vents can either have their own individual outlets or they can be combined as they leave the baffle to form a common vent having a common outlet.

We prefer to use the apparatus in such a manner that a substantial zone of first material is formed in the lee of each baffle, rather than to remove the first material from the zone as soon as it starts to collect. This we find can be most readily achieved by using an apparatus having a variable throttle valve on each vent. Where a large array is used, it is clearly more economical to combine as many tubular vents as possible in order that a single vent with a single valve may be used for each set of combined vents. However, it is generally not advantageous in an efficient array to combine vents spaced far apart in a downstream direction or vent which for other reasons may have substantially different rates of disengagement, and hence require different degrees of throttling.

As will be appreciated from the above, the device may normally operate by virtue of the pressure difference between the baffle leeward zone and the vent outlet, the latter normally being the lower without additional energes sources being required. However, under circumstances where this does not occur, vacuum can be applied to the vent to assist in removal of the less dense fluid.

The relative motion can be caused by moving the probe through a static reservoir of the fluent mixture. However, it is often helpful to be able to effect the disengagement as a continuous process, and this can be achieved by causing the mixture to flow past the probe, or array of probes as the case may be. Accordingly, as a still further aspect of the invention, we provide apparatus for disengaging a first fluid from a fluent mixture of the first fluid with one or more denser fluids, comprising a conduit defining a flow-path along which the fluent mixture can be caused to flow, and at least one probe extending into the flow-path, the probe comprising a baffle positioned within the flow-path and shaped with a leeward surface for producing within the fluent mixture when the latter is caused to flow along the flow-path a zone of reduced pressure adjacent to the leeward surface, and a tubular vent having an outlet remote from the flow-path and an inlet within the zone adjacent to the leeward surface.

Although the above apparatus having a built-in flow-path has been described as being suitable for continuous operation, it can also be used for processing a batch of mixture by passing the latter therethrough either a single time, or several times by recycling, as may be required.

The present method and apparatus are useful for separating various fluent phases of different densities, but are especially suitable for removing gases from gas/liquid mixtures in which the gas is in the form of bubbles or even when it is at least partially dissolved in the liquid. The liquid can optionally have one or more solid materials dissolved and/or suspended therein.

The invention is particularly useful for degassing aqueous fermentation media, which typically contain soluble matter excreted by micro-organisms into the liquid, various inorganic salts and organic constituents, being either the supernatent liquor or including the micro-organisms themselves in suspension, with a gas both dissolved and as bubbles, often forming a froth. This is a known problem area, for which the invention provides an effective solution at low cost. Being simple with no moving parts, a well-constructed apparatus should give long and reliable service with little maintenance. The sole energy requirements are generally provided entirely by the fluid flow, and high volumetric intensity (i.e. gas removed per unit size of device) can be achieved by this method, when compared for example with known gravity degassers. All these benefits are especially advantageous for fermentations, where sterile conditions are essential and where flow of materials is already provided in the process (e.g.

by a stirred vessel or air lift recirculating fermenter). The high volumetric intensity is particularly helpful in air lift fermeters where gas disengagement at the top of the riser is vital to performance and where space is generally limited.

The invention is illustrated by reference to the accompanying drawings, in which

Figure 1 is a sketch of a probe comprising a vent tube and attached baffle,

Figure 2 is a sketch of a probe comprising a vent tube and integral baffle,

Figure 3 is a section on the line III III of Figure 2,

Figures 4 and 5 are sections though alternative shapes to that of Figure 3,

Figure 6 is a sketch showing an array of nine probes,

Figure 7 is a sketch through a channel section conduit in which is mounted a probe substantially as shown in Figure 2,

Figure 8 is a sketch through a tubular conduit in which is mounted a similar probe.

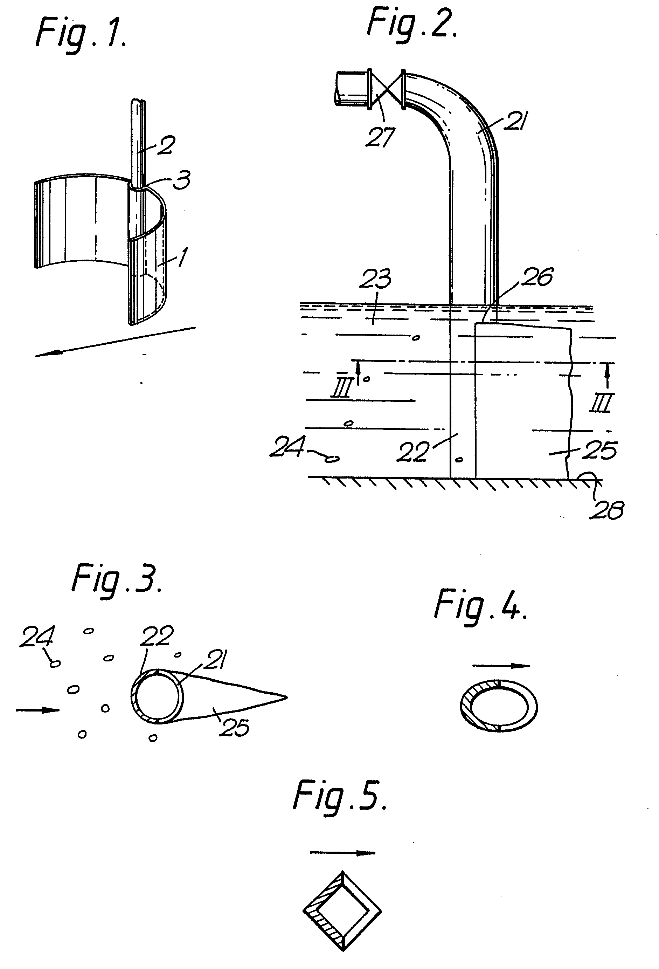

The probe of Figure 1 comprises a curved baffle 1 welded to a tubular vent 2. It is used with the baffle submerged, e.g. up to the level 3 above the upper edge of the baffle, in a fluent mixture, and the mixture is caused to flow in the direction of the arrow, the concave surface 4 thus being the leeward surface.

In Figures 2 and 3 is shown one preferred form of probe, comprising a tubular vent 21 from which half an end portion has been removed, leaving a baffle 22 with semi-circular cross section. When this is immersed in a fluent mixture 23 containing gas bubbles 24 and being caused to flow in the direction of the arrow, the bubbles collect in a zone 25 to leeward to the baffle. The end 26 of the complete portion of vent tube provides the inlet to the vent, and a throttle valve is provided to control flow of gas up the vent from the zone 25. In the situation illustrated in Figure 2, the probe is held stationary within a flowpath defined by conduit 28, the base only of which is shown. The conduit shown in Figure 2 has a channel section giving a free surface to the liquid medium flowing along it. However, closed tubular conduit giving no such free surface when filled with the fluid medium can also be used most effectively, as shown in Examples hereinafter.

In use for removing air from aerated aqueous media, we find that the diameter of the baffle influences the rate of gas extraction, the latter appearing to increase as the 0.42 power of the baffle diameter. With liquids of higher viscosities, the zone of less dense material becomes more stable, this being particularly noticeable where the less dense fluid is a gas, provided the flow velocity is sufficient to form a substantial low-pressure zone. This applies to both Newtonian and non-Newtonian liquids, although these zones may be of different shapes.

The alternative shapes of Figures 4 and 5 are formed from elliptical and square sectioned tubes respectively, by removing half the tube width for the required baffle height, in essentially the same manner as for the circular section tube of Figure 3. Tubes of other cross-sectional shapes can, of course, be adapted in like manner.

-9-

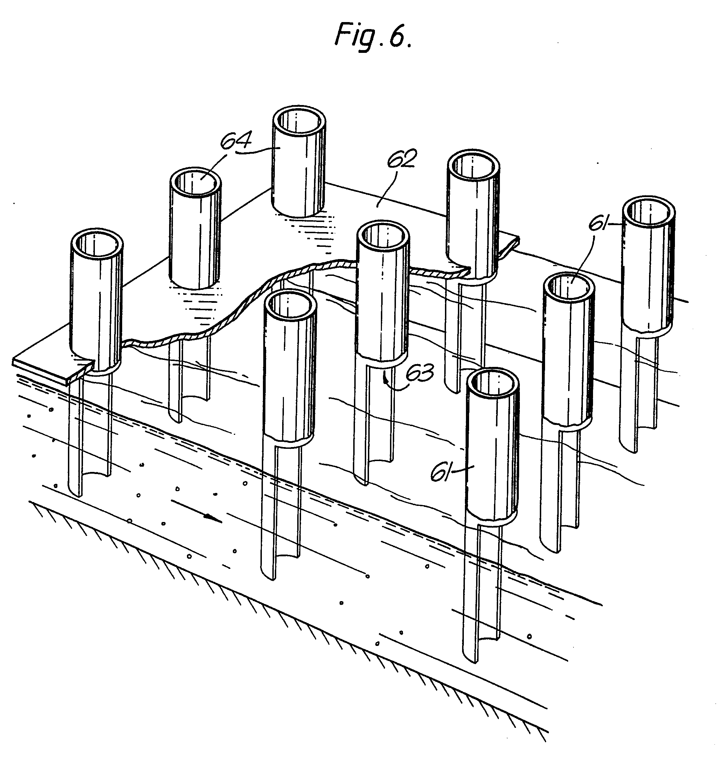

In Figure 6 is shown an array of nine probes, nine being chosen merely for illustrative purposes, the following description applying equally to other numbers of probes. The probes 61 are held in a flat plate 62 shown cut away to expose the lower parts of the probes. The probes which all extend downwards from the plate, by substantially the same amount, are of the kind illustrated in Figures 2 and 3. They are positioned in the plate with their vent inlets 63 below the plate, and the vent tubes 64 extending up through the plate.

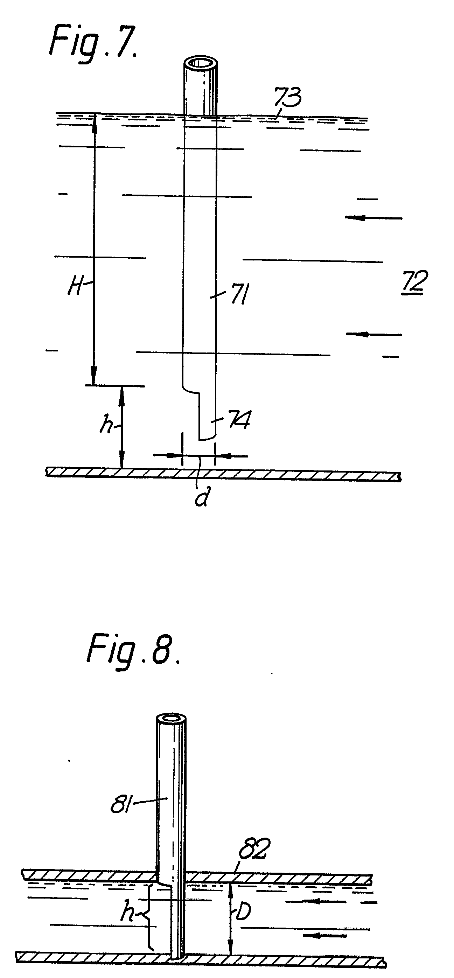

Figures 7 and 8 show experimental rigs used to obtain the results described in some of the Examples hereinafter. In Figure 7, a probe 71 is shown immersed in a flowing stream of fluid mixture 72 having a free surface 73, the depth of immersion, H (as measured to the vent inlet) being variable over the range 150-500 mm. The probe is formed from a length of circular tubing of external diameter d, the end portion 74 of which is bisected axially to a length h, and half removed to leave a concave, semicircular sectioned baffle. In Figure 8 a probe 81, substantially the same as that in Figure 7 is sealed onto a square sectioned duct 82 of diameter D.

To further illustrate the invention, we provide below experimental results that have been obtained using apparatus according to the present invention.

Examples 1-3

The apparatus used was substantially as shown in Figure 8. The width of the channel was 100 mm and the diameter (d) of the probe was 28 mm. The length (h) of the baffle was 100 mm. The fluid mixture consisted of water frothed up with air using a little detergent. The amounts of air and water were varied and in the results

-10-

below, the quoted voidage is the ratio of volumetric flow of air to the total volumetric flow prior to passing the probe. The results are given in the Table below, in which the liquid velocity quoted is its superficial velocity, i.e. the overall volumetric velocity divided by the cross sectional area.

TABLE 1

| Example | 1 | 2 | 3 |
|---------|------|------|------|
| input voidage (%) | 18 | 22 | 11 |
| liquid velocity (m/s) | 0.45 | 0.53 | 0.90 |
| gas removed (%) gas input | 27 | 18 | 46 |

Example 4

For many industrial processes, it is desirable to remove gas from liquors which typically contain various organic constituents and inorganic salts in aqueous solution, with the gas being held as bubbles and/or dissolved in the liquor, often forming a froth. To simulate such a liquor, a solution of potassium sulphate containing a detergent, was gassified with air, to a voidage of 47%. The aerated solution was then caused to flow along an open channel past a single probe, substantially as shown in Figure 7. The probe had a diameter (d) of 22 mm, baffle length (h) of 55 mm and a depth of immersion (H) of 400 mm in the flowing liquid. With a superficial liquid velocity of 2.1 m/s, 19 1/min of gas were removed by the single probe, this being 8% of the ingoing gas flow.

-11-

Example 5

Using an apparatus substantially as shown in Figure 8, in which the square sectional tubular duct had sides of height (D) equal to 100 mm, and the baffle length (h) was also 100 mm (i.e the baffle extended for the full height of the duct). The probe was formed from a 28 mm diameter tube. Again using aerated potassium sulphate solution with an overal superficial speed of 0.4 m/s and gas voidage of 4.7%, 65 l/min of gas were blown out of the probe's vent tube without any assistance by vacuum or other means.

Example 6

A fermentation medium containing gas at a voidage fraction of 18%, was passed through an apparatus substantially as shown in Figure 7. The probe dimensions were the same as for Example 4 (i.e. d = 22 mm, h = 55 mm) and this was inserted in the fermentation medium to a depth (H) of 250 mm. Using a liquid superficial velocity of 2.1 m/s the single probe removed gas at the rate of 2.6 l/min.

CLAIMS

1.    A method for disengaging a first fluid from a fluent mixture of the first fluid with one or more denser fluids, which method comprises using at least one probe comprising a baffle and a tubular vent having an inlet adjacent to a surface of the baffle and an outlet remote from its inlet, submerging the baffle and vent inlet within the mixture while maintaining the outlet outside the mixture, causing relative motion to occur between the probe and the mixture in a direction defining the said surface of the baffle as a leeward surface and at a velocity within a range which causes first material to collect in a zone adjacent to the leeward surface, the vent inlet being within the zone, and removing first material from the zone through the vent.

2.    A method as claimed in Claim 1 wherein the baffle has a concave leeward surface.

3.    A method as claimed in Claim 2 wherein the probe comprises a tube having an open end to provide the vent inlet, and a portion of the tube wall extending beyond the open end to provide an integral baffle.

4.    A method as claimed in any one of the preceding claims wherein the first fluid is a gas or mixture of gases, and the remainder of the mixture is a liquid medium comprising at least one liquid optionally with one or more solid material dissolved and/or suspended therein.

5.    A method as claimed in Claim 4 wherein the liquid medium comprises a fermentation medium.

6. A method as claimed in any one of the preceding claims which comprises throttling the vent, thereby to restrict the rate at which the first fluid flows out through the vent, the rate being adjusted so as to maintain a substantial zone of first material in the lee of the baffle.

7. Apparatus for disengaging a first fluid from a fluent mixture of the first fluid with one or more denser fluids, comprising a plurality of probes and a means for holding the probes, the probes extending from the holding means with the extended end of each probe comprising a baffle and each probe having a tubular vent with an inlet adjacent to a surface of the baffle, each probe being assembled in the holding means so that the surfaces of the baffles adjacent to their vent inlets are all aligned in the same direction, whereby on submerging the baffles in a fluid and causing relative motion of the probes with respect the fluid, when the direction of relative motion is such that the surface of one baffle adjacent to its vent inlet is a leeward surface, the corresponding surfaces of the other probes are likewise leeward surfaces.

8. Apparatus for disengaging a first fluid from a fluent mixture of the first fluid with one or more denser fluids, comprising a conduit defining a flow-path along which the fluent mixture can be caused to flow, and at least one probe extending into the flow-path, the probe comprising a baffle positioned within the flow path and shaped with a leeward surface for producing within the fluent mixture when the latter is caused to flow along the flow-path a zone of reduced pressure adjacent to the leeward surface, and a tubular vent having an outlet remote from the flow-path and an inlet within the zone adjacent to the leeward surface.

0100620

1/3

Fig.1.

Fig.2.

Fig.3.

Fig.4.

Fig.5.

Fig.6.

Fig.7.

73

H

71

72

h

74

d

Fig.8.

81

82

h

D

**European Patent Office**

**EUROPEAN SEARCH REPORT**

Application number

EP 83 30 4096

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 432 996 (H.W. PATTERSON) * Figures 1-4 * | 1-4,6-8 | B 01 D 19/00 B 01 D 17/02 |
| A | US-A-3 616 601 (A.M. SENKEWICH) * Claim 1; figure 4 * | | |
| A | DE-A-2 221 248 (REYNOLDS SUBMARINE SERVICES) * Claim 1; figures 1-4 * | | |
| A | DE-A-2 917 389 (MANDOR) * Figure 2 * | | |
| | ----- | | |

TECHNICAL FIELDS SEARCHED (Int. Cl. ³)

B 01 D 17/02
B 01 D 19/00
D 21 D 5/26

The present search report has been drawn up for all claims

| Place of search BERLIN | Date of completion of the search 22-09-1983 | Examiner KUEHN P |
|---|---|---|